# EUROPEAN PATENT APPLICATION

(11) **EP 1 943 937 A1**
(43) Date of publication of application: **16.07.2008**
(21) Application number: 07000423.9
(22) Date of filing: 10.01.2007
(51) Int. Cl.: A47L 15/44, A47L 15/42

(54) **Dishwashing machine**

(71) Applicant: Electrolux Home Products Corporation N.V., 1930 Zaventem (BE)
(72) Inventor: Brambilla, Enrico, 20127 Milano (IT); Alessandrelli, Roberto, 20158 Milano (IT); Salerno, Luigi, 20092 Cinisello Balsamo (IT)
(74) Representative: Baumgartl, Gerhard Willi

(57) **Abstract**

Dishwashing machine (1), comprising a wash tank (2) having a front loading opening and a pivotable front door (4) having an inner surface (5) for closing the wash tank (2), wherein at least one reservoir (12,12a,12b) for dishwashing additives (26) is provided inside the door (4) behind the inner surface (5), wherein an upper refilling port (13) is provided in the door (4) and a lower release port (14) is provided on the inner surface (5), both connected to said reservoir (12,12a,12b).

## Description

The invention concerns a dishwashing machine, comprising a wash tank having a front loading opening and a pivotable front door for closing the wash tank having an inner surface.

In such a household dishwashing machine mostly a high load volume is wished while the space available therefore is limited, especially regarding build-in machines. Therefore it is known to construct the front door flat in an area as large as possible so that the baskets can extend over the full depth of the wash tank.

Usually, dispensers for washing additives like rinse aid or detergent, usually comprising a reservoir for the additiv-e and a lid, are integrated in or on the inner surface of the front door, forming a bulky object which reduces the volume available for dishes to be washed.

Recently, it has been proposed to use a thin door design with a protruding part holding the,dispenser between an upper and lower basket. A complex door design is required and the protruding part again reduces the space available for dishes.

One reason for placing the dispenser in or on the door is accessability. The user of the dishwashing machine fully opens the door, opens the lid and refills the container. In the described state of the art the dispenser is located close to the floor and the refilling procedure is very unergonomic.

Another disadvantage of the known dispensers is that the dosing of the additive can only happen once during the washing cycle since the opening of the lid causes the whole content to be emptied into the wash tank. The setting of the dosage is done manually, so that the user may set wrong values when refilling the reservoir during loading operations, before the washing cycle.

The object of the current invention is to provide the dishwashing machine with a higher load volume and ergonomically improved design with respect to the refilling of reservoirs for additives.

According to the present invention, such an aim is reached in a household dishwashing machine of the above mentioned type, wherein at least one reservoir for dishwashing additives is provided inside the door behind the inner surface, wherein an upper refilling port is provided in the door and a lower release port is provided in the inner surface, both connected to said reservoir.

The dispensing device proposed by the present invention is composed of a reservoir provided inside the door behind the inner surface, normally formed by a steel panel, an upper refilling port and a lower release port as well as said connections. In such a configuration, for example a flat large area reservoir could be used which is disposed behind the inner surface of a flat door. Alternatively, protruding parts of the door needed for constructive reasons can be used to place the respectively formed reservoir behind them.

Advantageously, a thinner door can be constructed, increasing the effective volume of the wash tank. Additionally, also reservoirs of greater volume can be used so that fewer refilling operations are needed. For example, a user may easily fill two or three regular bottles of rinse aid into the reservoir using the refilling port and wait months before refilling.

Another advantage of the current invention is a better positioning of the refilling port which is located in the upper section of the door. In such an arrangement the user may (and should) perform the refilling operation with the door nearly closed, i.e. in an upright position, wherein the refilling port is located at a higher level above the floor. It is therefore easier to reach so that the ergonomy of the dishwashing machine is increased.

In one embodiment the reservoir is positioned behind or integrated in a marginal, protruding part formed as a sealing shoulder from the inner surface. Normally, the walls defining the front loading opening of the wash tank have a recession for sealing the wash tank against leakage of water during the washing cycle. This recession corresponds to a protruding shoulder on the inner surface, especially on a panel, of the door, whereby either in the recession or on the protruding part a gasket for sealing is provided. When the door is closed, the protruding part meets the recession and leakage of water is prevented by the gasket. The sealing shoulder formed on the inner surface of the door can for example have a u-shape if sealing is provided with respect to the side walls and the upper wall of the wash tank, while sealing of the lower part where the door is hinged is achieved by different mechanisms.

The volume below the protruding shoulder of the door is usually free from any component and can, according to the current invention, be used to place the reservoir, especially having a long and slim shape and a larger volume than known reservoirs of dispensers. In this construction no additional space on the door area is needed for the dispensing device. Apart from the protruding shoulder the door can be formed perfectly flat and thin, effectively increasing the high load of the dishwashing machine.

In such an embodiment, the refilling port and the release port can both be formed in the protruding part. The release port should be placed in the wet area, so that the additive can be released into the wash tank during the washing cycle. If the protruding part has an u-shape, the release port can be positioned in a leg close to the mounting of the door, while the refilling port can be positioned on the same leg, close to the bend. This way, the whole volume of the leg can be used as a reservoir.

Generally speaking, the refilling port can also be provided in a front panel of the door, especially in an area facing upwards when the door is closed. In this case, the door only needs to be slightly open or can even be closed while performing the refilling operation.

In an advantageous embodiment, two reservoirs for different additives, especially rinse aid and liquid detergent, with respective refilling and release ports can be provided, especially on opposite sides of the door. In the before mentioned u-configuration, for example, both legs can be used as or to house a reservoir, each for a different additive. This way, more previously free space is effectively used.

To allow the additives to be released optimally during the washing cycle, the opening and closing of the release port (or the release ports) can be electronically controllable. The dishwashing machine also comprises electronics adapted to control the opening and closing of the release port, so that the additive is released at the right time.

In an especially advantageous embodiment, the reservoir can comprise a pre-release chamber and a storage chamber, the pre-release chamber being refillable from the storage chamber while the release port is closed and the connection between the storage chamber and the pre-release chamber being closed while the release port is open. The pre-release chamber has a predetermined volume, so that an exact dosing is possible with such an arrangement. Preferably, the storage chamber can be dimensioned as to contain several such doses, that means, the volume of the storage chamber is at least two times greater than the volume of the pre-release chamber. In this case, additive for more than one washing cycle can be stored and released in predetermined doses. The dosing is exact and not subjected to mistakes committed by a user.

Such a reservoir may work the following way, controlled by the above-mentioned electronics. At the beginning of the washing cycle, after the door has been closed, the pre-release chamber is filled with additive from the storage chamber, while the release port is still closed. After filling the pre-release chamber, the connection between the storage chamber and the pre-release chamber is closed. At a predetermined time during the washing cycle, the release port is opened and the contents of the pre-release chamber are released into the wash tank. Thereafter, the release port is closed again. This process can be iterated if multiple doses are to be supplied during the washing cycle.

In one embodiment, this functionality can be achieved by closing the connection between the chambers and the connection between the pre-release chamber and the release port by spring-loaded sealing elements, said sealing elements being actuated into an open state by respective tappets arranged on an actuator element. When the actuator is moved in a predetermined direction, one of the tappets contacts the sealing element, opening the respective connection against the force of the spring. The overall construction is such that both connections cannot be opened at the same time. By way of example, the connections could be located coaxially so that a rod having the tappets formed on it can be positioned in the centre of both connections, the sealing elements having a through-hole through which the rod is slidingly guided. Actuation of the rod, initiated by the electronics, opens or closes respective connections.

In a dishwashing machine in which the opening and closing of the release port is electronically controlled, it is also possible to construct the dishwashing machine such that it is able to multiply release washing additives. This can be achieved by multiply opening the release port during the washing cycle or - to obtain a more exact dosing - by multiply refilling the pre-release chamber and releasing its contents.

The refilling port can be constructed using means known in the state of the art and may for example comprise a lid, a sliding shutter or a chute openable using a manual operating element. The construction of a release port is also well known in the art, so that it shall not be discussed, further in this description.

Further advantages and details of the current invention can be learned from the following description of preferred embodiments in connection with the drawings, wherein:
- Fig. 1: is a perspective view of a dishwasher according to the current invention,
- Fig. 2: is a perspective view of the door of the dishwashing machine of Fig. 1,
- Fig. 3: is a detail of the door of Fig. 2 showing the release port,
- Fig. 4: is a detail of the door of Fig. 2 showing the refilling port,
- Fig. 5: is a schematic drawing showing alternative positions of the refilling port on a dishwashing' machine front door,
- Fig. 6A-E: are schematic drawings showing the construction and functioning of a reservoir according to a first embodiment, and
- Fig. 7A-E: are schematic drawings showing the construction and functioning of a reservoir according to a second embodiment.

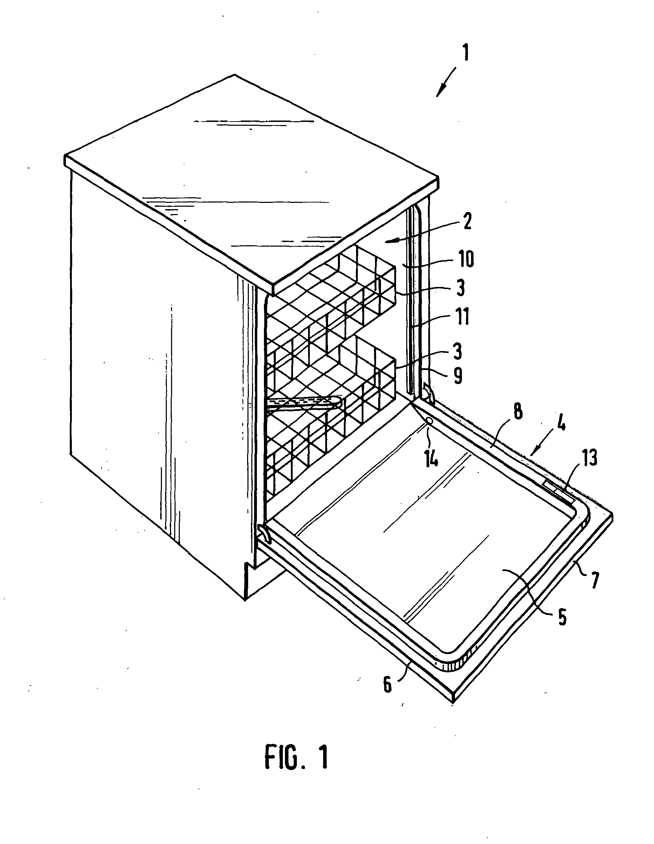

Fig. 1 shows a dishwasher 1 according to an embodiment of the current invention. It comprises a wash tank 2 with a front loading opening. Baskets 3 for receiving the dishes are retractably mounted inside the wash tank 2. The wash tank 2 can be closed by a pivotable front door 4 comprising an inner surface 5, formed by an inner panel 6 made of stainless steel. The front door 4 also comprises a front panel 7.

On the inner surface 5 of the door 4 a protruding part 8 in a u-shape is formed to fit with corresponding recessions 9 formed in the walls 10 of the wash tank 2. A gasket 11 is mounted in the recession 9 facing the protruding part 8 of the door so that on closure of the door the protruding part 8 acts as a sealing shoulder contacting the gasket 11 so that water cannot leak from the wash tank 2 during the washing cycle.

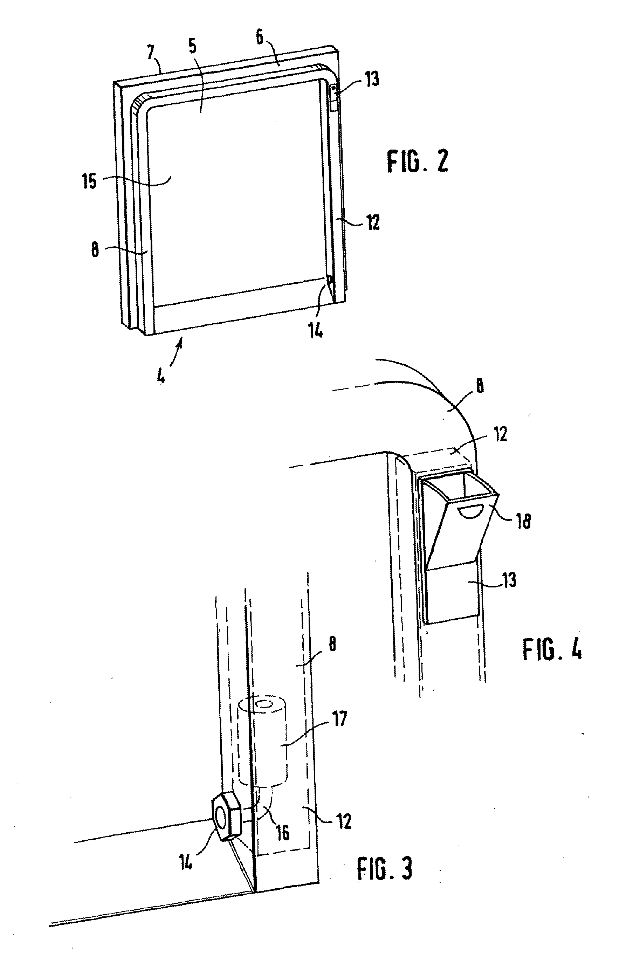

A reservoir for dishwashing additives not yet shown in Fig. 1 is provided inside the door behind the inner surface 5 being part of a dispenser device now discussed with respect to Fig. 2.

Fig. 2 is a perspective view of the door 4 of the dishwashing machine 1. As can be seen, a reservoir 12 for dishwashing additives is provided inside the door behind the protruding part 8 of the inner surface 5. The reservoir 12 fills the full length of the right leg of the protruding part 8. It is connected to an upper refilling port 13 and a lower release port 14. Both ports are arranged on the inner surface 5 in the so-called wet area. By including the reservoir 12 in the formerly not used volume behind the protruding part 8 no further parts protrude from the door 4, so that the inner area 15 of the inner surface 5 can be formed perfectly flat and thin. Therefore, the baskets 3 can extend over the whole volume of the wash tank 2 allowing a higher load of the dishwasher.

The reservoir 12 has a larger volume compared to formerly used reservoirs and may keep several doses of additive used in a washing cycle. The reservoir 12 can be used, e.g., for rinse aid or liquid detergent, or both. Of course, a second dispensing device comprising a reservoir, a refilling port and a release port as well as the necessary' connections can be integrated into the door behind the other leg of the protruding part 8.

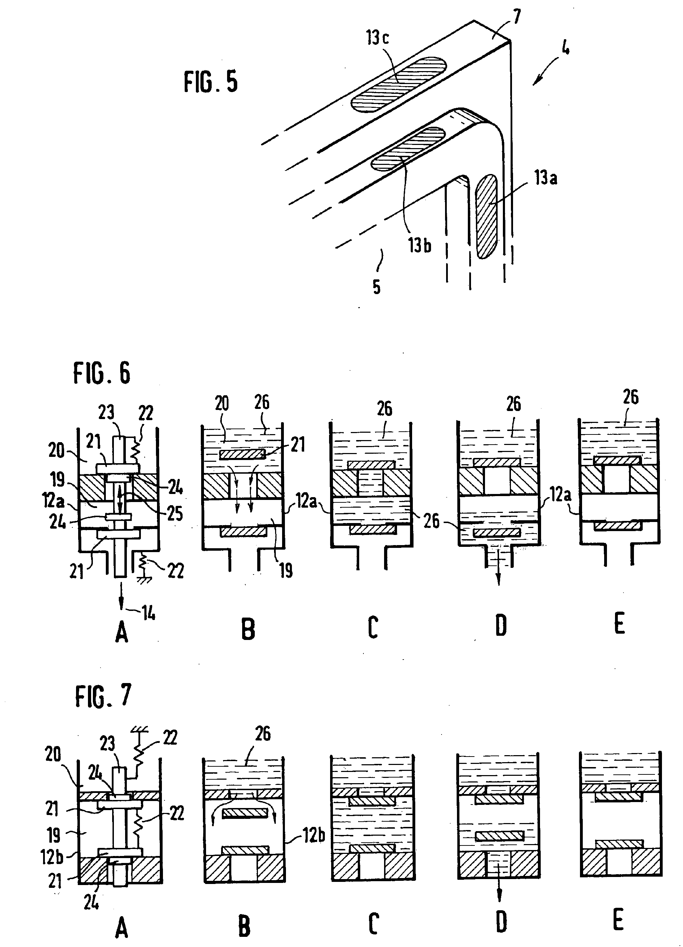

Fig. 3 shows details of the release port located in the lower right corner of the door 4. The release port 14 is connected to the reservoir 12 by suitable connection means 16 and a valve 17. Once the valve 17 is opened, for example controlled by dedicated electronics, the contents of the reservoir 12 are released into the wash tank 2 due to gravitational forces. The dose can for example be determined by a respective opening time. The reservoir may also contain a pre-release chamber for exact dosing which will be described later with respect to Fig. 6 and 7.

Fig. 4 shows in more detail the part of the door 4 containing the refilling port 13. The refilling port 13 comprises a manually operated chute 18 which is directly connected to the upper part of the reservoir 12. The refilling port 13 can be reached through an opening formed in the protruding part 8 of the inner surface 5. Due to its position in the upper part of the door 4, the refilling port is optimally placed for ergonomical use.

The refilling port 13 may also comprise a lid or sliding shutter for opening and closing during the refilling operation.

Fig. 5 is a schematic view of the right upper corner of the front door 4 showing alternative locations 13a, 13b, 13c for the refilling port 13. As can be seen, the refilling port 13 may also be positioned in the dry area of the inner surface 5, facing upwards, position 13b, or on the front panel 7, also facing upwards, position 13c. It is also possible to place the refilling port 13 in the upper area of the outside surface of the door, making possible a refilling operation when the door is closed. In any case, the door can remain basically in upright position so that easy access to the refilling port 13 is possible.

Fig. 6A - E show the construction and function of a first embodiment of a reservoir 12a. Fig. 6A shows the construction of the reservoir 12a. It comprises a pre-release chamber 19 of a predetermined volume and a storage chamber 20 of volume greater than the volume of the pre-release chamber. Sealing elements 21 close the respective connections between the chamber 19, 20 and the chamber 19 and the release port 14. They are pressed against the respective openings by virtue of springs 22. The sealing elements 21, which can for example be formed of plastics, comprise a through-hole in their middle through which a rod 23 functioning as an actuator is slidably guided. Protruding from the rod 23 are tappets 24 for moving the sealing elements 21 and thereby opening the connections. The rod 23 can be actuated up and down as indicated by arrow 25.

The function of this first embodiment of the reservoir 12a is shown in Fig. 6B - E. According to Fig. 6B, the rod 23 is moved upwards so that the upper tappet 24 contacts the upper sealing element 21 and moves the upper sealing element 21 to open the connection between the storage chamber 20 and the pre-release chamber 19 which is subsequently filled with dishwashing additive. Once the pre-release chamber 19 is filled, the connection is closed by moving the rod 23 downwards. The connection is closed by virtue of the spring 22.

According to Fig. 6C, both connections are closed by the sealing elements 21. At a certain stage in the washing cycle, the release of the additive 26 is initiated by a downwards movement of the rod 23, so that the lower tappet 24 contacts the lower sealing element 21 and moves it against the force of spring 22 to open a connection between the pre-release chamber 19 and the release port 13. When the pre-release chamber 19 is emptied, the rod 23 is once again moved upwards and the connection is closed, as shown in Fig. 6E. During the next washing cycle or, if the additive is multiply released during one washing cycle, the pre-release chamber 19 is again filled as shown in Fig. 6B.

In this manner, exact dosing and a rare need for refilling can be achieved.

Another embodiment of a reservoir 12b is shown in Figures 7A -7E , which is slightly modified with respect to the first embodiment, but functions the same way and is virtually self-explaining.

## Claims

1. Dishwashing machine, comprising a wash tank (2) having a front loading opening and a pivotable front door (4) having an inner surface (5) for closing the wash tank (2),
**characterized in that**
at least one reservoir (12, 12a, 12b) for dishwashing additives (26) is provided inside the door (4) behind the inner surface (5), wherein an upper refilling port (13) is provided in the door (4) and a lower release port (14) is provided on the inner surface (5), both connected to said reservoir (12, 12a, 12b).

2. Dishwashing machine according to claim 1, **characterized in that** a marginal, protruding part (7) is formed as a sealing shoulder from the inner surface (5), behind which the reservoir (12, 12a, 12b) is positioned.

3. Dishwashing machine according to claim 2, **characterized in that** the refilling port (13) and/or the release port (14) are formed in the protruding part (8).

4. Dishwashing machine according to claim 1 or 2, **characterized in that** the refilling port (13) is provided in a front panel (6) of the door (4), especially on a surface facing upwards when the door (4) is closed.

5. Dishwashing machine according to one of the preceding claims, **characterized in that** two reservoirs (12, 12a, 12b) for different additives (26) with respective refilling and release ports (13, 14) are provided, especially on opposite sides of the door (4).

6. Dishwashing machine according to one of the preceding claims, **characterized in that** the opening and closing of the release port (14) is electronically controllable.

7. Dishwashing machine according to claim 6, **characterized in that** the reservoir (12, 12a, 12b) comprises a pre-release chamber (19) and a storage chamber (20), the pre-release chamber (19) being refillable from the storage chamber (20) while the release port (14) is closed and the connection between the storage chamber (20) und the pre-release chamber (19) being closed while the release port (14) is open.

8. Dishwashing machine according to claim 7, **characterized in that** the connection between the chambers (19, 20) and the connection between the pre-release chamber (19) and the release port, (13) are closed by spring-loaded sealing elements (21), said sealing elements (21) being actuated into an open state by respective tappets (24) arranged on an actuator element (23).

9. Dishwashing machine according to one of the claims 6 to 8, **characterized in** being able to multiply release washing additive, (26).

10. Dishwashing machine according to one of the preceding claims, **characterized in that** the refilling port (13) comprises a lid and/or sliding shutter and/or a chute (18) openable using a manual operating element.
